# EUROPEAN PATENT SPECIFICATION

(11) **EP 3 768 076 B1**
(45) Date of publication and mention of the grant of the patent: **10.04.2024**
(21) Application number: 19715584.9
(22) Date of filing: 20.03.2019
(51) Int. Cl.: A01K 5/00, A47F 1/03, B65G 65/46, A01K 5/02, A47F 1/035

(54) **A DISPENSING HOPPER AND A METHOD FOR DISPENSING A NON-LIQUID MATERIAL WITH FLOWABLE CHARACTERISTICS**
AUSGABETRICHTER UND VERFAHREN ZUR AUSGABE EINES NICHTFLÜSSIGEN MATERIALS MIT FLIESSFÄHIGEN EIGENSCHAFTEN
TRÉMIE DE DISTRIBUTION ET PROCÉDÉ DE DISTRIBUTION D'UN MATÉRIAU NON LIQUIDE PRÉSENTANT DES CARACTÉRISTIQUES FLUIDES

(30) Priority: 20.03.2018 IE S20180060
(43) Date of publication of application: 27.01.2021
(73) Proprietor: J.F.C. Manufacturing Co. Limited, County Galway (IE)
(72) Inventor: CONCANNON, John Francis, Galway (IE); CONCANNON, Damian Martin, Galway (IE)
(74) Representative: Gorman, Francis Fergus
(86) International application number: PCT/IE2019/000003
(87) International publication number: WO 2019/180691

(56) References cited:
- WO-A1-96/08963
- WO-A1-97/29330
- CN-B- 105 417 205
- DE-A1- 2 618 911
- ES-A1- 2 424 683
- US-A- 4 207 995

## Description

The present invention relates to a dispensing hopper, and in particular, to a dispensing hopper for holding and dispensing a non-liquid material with a flowable characteristic, for example, a particulate material, such as granular material, a powder material including either or both fine and coarse powders, also a flake material and any other non-liquid and non-sludge material with flowable characteristics. Hereinafter throughout this specification and the claims appended thereto, all such non-liquid and non-sludge materials with flowable characteristics are referred to as a flowable particulate material or particulate materials. The invention also relates to a method for dispensing such a flowable particulate materials.

Dispensing hoppers for holding and dispensing flowable particulate materials of the type hereinbefore defined are well known. In general, such hoppers comprise a base, a pair of spaced apart side walls extending upwardly from the base joined by spaced apart end walls also extending upwardly from the base. An auger, for example, a wire auger, typically, is located in the base, and in general, is located in a dispensing channel extending longitudinally through the base. The auger is configured to urge the particulate material along the dispensing channel and through a dispensing outlet, which is located in one of the end walls and which is aligned with the dispensing channel and the auger. A problem with such dispensing hoppers, particularly, when the material held in the hopper for dispensing therefrom comprises a relatively fine powder, is that the powder material tends to bridge over the auger, and once the powder material bridges, it essentially forms an elongated bore with the dispensing channel, and the auger rotates ineffectively in the formed bore. This is a particular problem when the flowable particulate material held in the dispensing hopper comprises a powder material, and in particular, a fine powder material, such as a milk powder of the type, which subsequent to being dispensed from the hopper is typically mixed with water, and possibly other additives, such as vitamins and supplements for feeding to young calves. The milk powder in the hopper tends to bridge over the auger, thereby preventing further dispensing of the milk powder from the dispensing hopper by the auger.

Various attempts have been made to address this problem, however, in general, such attempts have on balance, failed, or while partly solving the bridging problem have led to other problems.

U.S. Patent Specification No. 4,207,995 of Neely discloses a dispensing hopper for dispensing granular material comprising a base having a pair of spaced apart opposite side walls joined by spaced apart opposite end walls. The base defines a dispensing channel extending longitudinally along the base between the opposite end walls, and a dispensing auger is located in the dispensing channel for dispensing the granular material in the hopper through an outlet. A circular disc shaped agitator is located in the hopper above the dispensing auger, and is mounted on a shaft extending transversely of the dispensing auger between and rotatably mounted in the respective opposite side walls. The agitator comprises a plurality of teeth spaced apart circumferentially around the periphery thereof which are engageable with the auger, so that as the auger rotates the agitator is rotated. Baffles extending on respective opposite sides of the agitator agitate and urge the granular material towards the dispensing auger.

Chinese Patent Specification No. 105 417 205 of Hongbo et al. discloses a dispensing hopper for dispensing powder material. The hopper comprises a dispensing auger located in and extending longitudinally along a dispensing channel defined in a base of the hopper for dispensing powder material from the hopper through an outlet port. An agitator disc is mounted fast on a shaft located above and extending transversely of the dispensing auger between respective opposite sides of the hopper wall. The agitator disc of Hongbo is rotated by the dispensing auger in a similar manner to that of Neely. A pair of augers are mounted fast on the shaft carrying the agitator disc, the flights of which are configured for urging powder material inwardly towards the agitator disc and in turn downwardly onto the auger.

There is therefore a need for a dispensing hopper which addresses the problem of bridging of flowable particulate material in a dispensing hopper.

The present invention is directed towards providing such a dispensing hopper, and the invention is also directed towards providing a method for dispensing a flowable particulate material.

According to the invention there is provided a dispensing hopper for dispensing a flowable particulate material, the dispensing hopper comprising a base, a peripheral wall extending upwardly from and around the base and defining with the base a hollow interior region for holding the particulate material, a dispensing outlet being provided from the hollow interior region, a dispensing element located in the hollow interior region for dispensing the particulate material through the dispensing outlet, and at least one agitating element rotatably mounted about a corresponding rotational axis for agitating the particulate material in the hollow interior region, the at least one agitating element defining a circular periphery and having a plurality of circumferentially spaced apart engagement elements located around and extending radially outwardly from the periphery thereof, the engagement elements of the at least one agitating element being engageable with the dispensing element for the transfer of drive from the dispensing element to the agitating element, so that the at least one agitating element is rotated about the corresponding rotational axis in response to operation of the dispensing element, wherein the at least one agitating element is rotatably mounted on the base to one side of the dispensing element.

Preferably, the rotational axis about which the at least one agitating element is rotatable is substantially perpendicularly to the base.

In one embodiment of the invention at least two agitating elements are located on the one side of the dispensing element spaced apart longitudinally along the dispensing element. Preferably, a plurality of the agitating elements are located on the one side of the dispensing element, and spaced apart longitudinally along the dispensing element.

In another embodiment of the invention the agitating elements are equi-spaced apart longitudinally along the dispensing element on the one side thereof. Preferably, the rotational axes of the corresponding agitating elements on the one side of the dispensing element extend substantially parallel to each other. Advantageously, the rotational axis of each agitating element lies in a corresponding plane extending substantially transversely of the dispensing element.

In another embodiment of the invention at least one pair of the agitating elements is provided, the agitating elements of the at least one pair thereof being located on the respective opposite sides of the dispensing element. Preferably, the pairs of the agitating elements on the respective opposite sides of the dispensing element are aligned with each other. Advantageously, the rotational axes of the agitating elements of each pair thereof lie in a common plane extending substantially transversely of the dispensing element.

Preferably, each agitating element is co-operable with the dispensing element for the transmission of drive from the dispensing element to the corresponding agitating element.

In one embodiment of the invention the engagement elements of each agitating element are configured for agitating the particulate material as the agitating element rotates about its rotational axis.

Preferably, the engagement elements are defined by teeth. Advantageously, the engagement elements comprise gear teeth.

In one embodiment of the invention the engagement elements are equi-spaced apart circumferentially around the periphery of each agitating element.

In another embodiment of the invention each agitating element comprises a disc element.

Preferably, each agitating element extends substantially parallel to the base. Advantageously, each agitating element abuts the base.

In one embodiment of the invention each agitating element is rotatably mounted on a corresponding carrier shaft extending substantially perpendicularly from the base.

In another embodiment of the invention the base comprises at least one inclined portion inclining downwardly towards the dispensing element on a corresponding side thereof.

In another embodiment of the invention respective inclined portions of the base incline downwardly towards the dispensing element on both sides thereof.

Preferably, at least one of the agitating elements is located on at least one of the inclined portions of the base.

In one embodiment of the invention the inclined portions of the base define an included angle in the range of 40° to 140°. Preferably, the inclined portions of the base define an included angle in the range of 65° to 115'. Advantageously, the inclined portions of the base define an included angle of approximately 90°.

In one embodiment of the invention the base defines a longitudinally extending dispensing channel.

In another embodiment of the invention the dispensing element is located in the dispensing channel. Preferably, the dispensing channel is of semi-circular transverse cross-section. Advantageously, the dispensing channel is of diameter to operably accommodate the dispensing element. Ideally, the dispensing element defines an elongated cylindrical envelope of diameter just less than the diameter of the dispensing channel.

In one embodiment of the invention the dispensing outlet is aligned with the dispensing channel. Preferably, the dispensing outlet is located adjacent one end of the dispensing channel. Advantageously, the dispensing outlet is formed in the peripheral wall.

In another embodiment of the invention the dispensing element comprises an elongated dispensing element.

Preferably, the dispensing element defines an longitudinally extending central longitudinal axis along which the particulate material is urged by the dispensing element to the dispensing outlet.

Advantageously, the dispensing element comprises an elongated dispensing auger.

In one embodiment of the invention the engagement elements of each agitating element are engageable with the flight of the dispensing auger.

In another embodiment of the invention the dispensing auger comprises a wire auger, with the wire defining the flight of the dispensing auger. Preferably, the dispensing auger is rotatable about the central longitudinal axis.

In another embodiment of the invention a drive means is provided for operating the dispensing element. Preferably, the drive means is located externally of the hopper. Advantageously, the drive means is located externally on the peripheral wall at a location opposite the dispensing outlet. Advantageously, the drive means comprises a drive motor. Preferably, the drive means comprises an electrically powered drive motor. Advantageously, the drive means comprises an electrically powered geared motor.

In one embodiment of the invention the peripheral wall of the dispensing hopper comprises a pair of spaced apart side walls extending upwardly from the base, joined by a pair of spaced apart end walls extending upwardly from the base. Preferably, the dispensing outlet is located in one of the end walls adjacent the base. Advantageously, the side walls of the hopper extend parallel to the dispensing element.

In one embodiment of the invention the dispensing element extends from one end wall to the other end wall. Advantageously, the end walls extend substantially transversely of the dispensing element. Preferably, the dispensing outlet is of circular transverse cross-section. Advantageously, the dispensing element extends into the dispensing outlet. Preferably, the dispensing outlet is defined by a dispensing bore extending through the peripheral wall. Advantageously, the dispensing outlet is formed by a dispensing bore extending through a tubular dispensing port.

Additionally the invention provides a method for dispensing a flowable particulate material, the method comprising providing a hopper having a base, a peripheral wall extending upwardly from and around the base and defining with the base a hollow interior region for holding the particulate material, providing an outlet from the hollow interior region, locating a dispensing element in the hollow interior region for dispensing the particulate material through the dispensing outlet, rotatably mounting at least one agitating element on the base about a rotational axis to one side of the dispensing element for agitating the particulate material in the hollow interior region configuring the at least one agitating element to be rotated about the corresponding rotational axis in response to the operation of the dispensing element, charging the hollow interior region with the flowable particulate material, and rotating the dispensing element to urge the flowable particulate material through the dispensing outlet, and to rotate the at least one agitating element about the rotational axis thereof.

The advantages of the invention are many. The most important advantage of the invention is that bridging of particulate material in the hopper over the dispensing element is avoided, and therefore, the dispensing element dispenses the flowable particulate material each time the dispensing element is operated. Another very important advantage of the invention is that the hopper according to the invention can be configured to relatively accurately meter predefined quantities of a flowable particulate material, by volume relatively accurately. Since bridging of the particulate material over the dispensing element is avoided, the particulate material in the hollow interior region of the hopper is continuously available to the dispensing element for dispensing thereof through the dispensing outlet. Thus, by controlling the on-time during which the dispensing element is operating, each time the dispensing element is operated for a set predefined period of time, the quantity by volume of the particulate material dispensed from the hopper by the dispensing element is proportional to the on-time period during which the dispensing element is operating.

A further advantage of the invention is that due to the fact that bridging of the particulate material over the dispensing element is avoided, the hopper may be operated unattended.

An additional advantage of the invention is that due to the construction of the hopper, and in particular, the side walls and the fact that the side walls are provided with arcuate portions which define substantially vertically extending channels into which the respective agitating discs extend adjacent the lower end thereof, it has been found that irrespective of the height of the side and end walls of the hopper above the base, and in turn the level of powder material in the hopper above the auger, the volume of powder material dispensed for each revolution of the auger remains constant whether the level of powder material in the hopper is 500mm above the dispensing auger, 1000mm above the dispensing auger, 1500mm above the dispensing auger, 2000mm above the dispensing auger or greater. In other words, there is no restriction, within reason, to the height to which the peripheral wall of the hopper may be constructed, nor is there any restriction on the level to which the hollow interior region of the hopper may be filled with the flowable particulate material.

The invention will be more clearly understood from the following description of a preferred non-limiting embodiment thereof which is given by way of example only with reference to the accompanying drawings, in which:

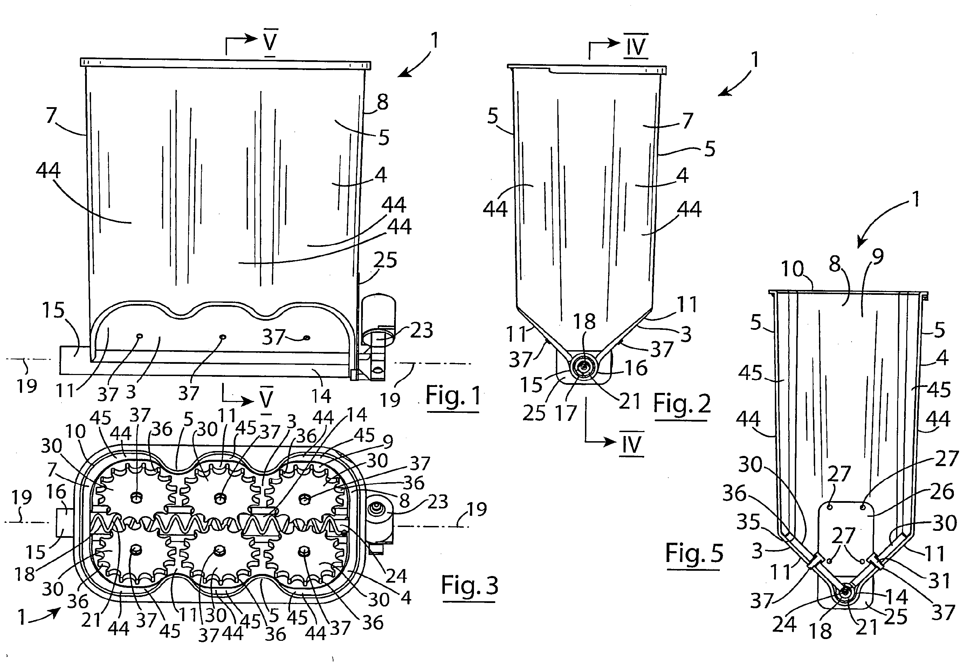

Fig. 1 is a side elevational view of a dispensing hopper according to the invention for holding and dispensing a flowable particulate material,
Fig. 2 is a front end elevational view of the dispensing hopper of Fig. 1,
Fig. 3 is a top plan view of the dispensing hopper of Fig. 1,

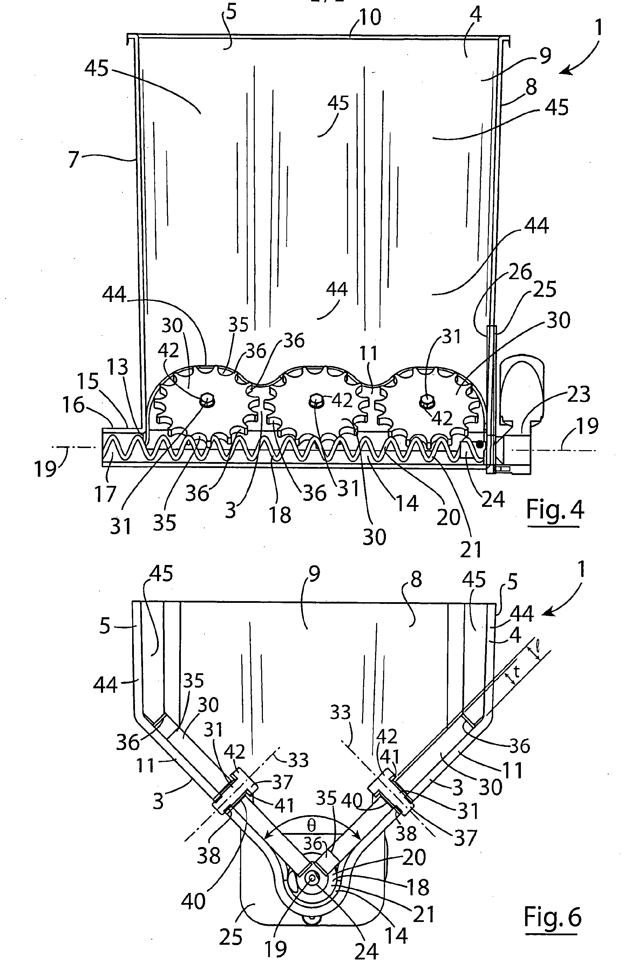

Fig. 4 is a cross-sectional side elevational view of the dispensing hopper of Fig. 1 on the line IV-IV of Fig. 2,
Fig. 5 is a transverse cross-sectional end elevational view of the dispensing hopper of Fig. 1 on the line V-V of Fig. 1, and
Fig. 6 is an enlarged transverse cross-sectional end elevational view of a portion of the dispensing hopper of Fig. 1 on the line V-V of Fig. 1.

Referring to the drawings there is illustrated a dispensing hopper according to the invention indicated generally by the reference numeral 1 for holding and storing a flowable particulate material as hereinbefore defined, and in this embodiment of the invention a fine particulate material, such as a powder material of the type commonly referred to as milk powder for mixing with water and possibly other additives to produce a liquid milk replacer of the type commonly fed to calves. The dispensing hopper 1 is of plastics material formed by rotational moulding and comprises a base 3 and a peripheral wall 4 extending upwardly from and around the base 3. In this embodiment of the invention the peripheral wall 4 comprises a pair of spaced apart side wall 5 extending upwardly from the base 3 on respective opposite sides thereof, and a pair of spaced apart end walls, namely, a front end wall 7 and a rear end wall 8 also extending upwardly from the base 3 at respective opposite ends thereof between and joining the side walls 5. The side walls 5 and the end walls 7 and 8 taper slightly inwardly downwardly and define with the base 3 a hollow interior region 9 for holding the powder material. The side walls 5 and the end walls 7 and 8 define an upper open mouth 10 to the hollow interior region 9 through which the hollow interior region 9 of the hopper 1 is charged with the powder material.

The base 3 comprises a pair of inclined base portions 11 which incline inwardly downwardly from the side walls 5 and terminate in an elongated central dispensing channel 14 extending from the rear end wall 8 to the front end wall 7 and parallel to the side walls 5. The dispensing channel 14 is of substantially semi-circular transverse cross-section, and terminates at one end in a dispensing outlet port 15 formed in the front end wall 7, and at the other end, where the dispensing channel 14 is closed by the rear end wall 8.

The dispensing outlet port 15 comprises a tubular member 16 extending from the front end wall 7 and having an outlet bore 17 of circular transverse cross-section extending therethrough. The outlet bore 17 communicates with the dispensing channel 14 through a communicating bore 13 of circular transverse cross-section extending through the front end wall 7. The communication bore 13 and the dispensing bore 17 are of diameter substantially similar to the diameter of the dispensing channel 14, and are centrally aligned with the dispensing channel 14.

A dispensing element, in this embodiment of the invention a dispensing auger 18 is located in and extends the length of the dispensing channel 14 and into the outlet bore 17 of the dispensing outlet port 15. The dispensing auger 18 defines a longitudinally extending central axis 19 about which the dispensing auger 18 is rotatable in the dispensing channel 14 for urging the powder material from the hollow interior region 9 of the hopper 1 through the outlet bore 17 of the dispensing outlet port 15. In this embodiment of the invention the central longitudinal axis 19 defined by the dispensing auger 18 coincides with a longitudinally extending central axis defined by the dispensing channel 14 and the outlet bore 17 of the dispensing outlet port 15.

In this embodiment of the invention the dispensing auger 18 comprises a wire auger with a helically shaped wire 20 of stainless steel which defines the flight 21 of the dispensing auger 18. The helically shaped wire 20 of the dispensing auger 18 defines an outer periphery which defines an elongated cylindrical envelope. The cross-sectional diameter of the dispensing channel 14 is such as to operably accommodate the dispensing auger 18 therein for urging the powder material along the dispensing channel 14 and through the outlet bore 17 of the dispensing outlet port 15. In this embodiment of the invention the diameter of the envelope defined by the dispensing auger 18 is just less than the diameter of the dispensing channel 14.

A drive means, in this embodiment of the invention an electrically powered geared drive motor 23 is mounted on the rear end wall 8 of the hopper 1. A drive shaft 24 of stainless steel of the geared drive motor 23 extends through the rear end wall 8, and the dispensing auger 18 is secured to the drive shaft 24 for rotating the dispensing auger 18, for in turn urging the powder material through the dispensing channel 14 and in turn through the dispensing outlet port 15. The drive motor 23 comprises a mounting plate 25 which is sealably secured to a carrier panel 26 formed in the rear end wall 8 of the dispensing hopper 1. Screws 27 secure the mounting plate 25 to the carrier plate 26 with the rear end wall 8 therebetween, and with the mounting plate 25 sealably secured to the rear end wall 8. The drive shaft 24 is rotatably mounted in a bearing (not shown) in the mounting plate 25 of the drive motor 23. A seal (also not shown) associated with the bearing (not shown) in the mounting plate 25 of the drive motor 23 seals the bearing (not shown) and the gears (also not shown) of the drive motor 23 from the powder material in the dispensing hopper 1.

An agitating means for agitating the powder material in the hollow interior region 9 of the hopper 1 adjacent the dispensing auger 18, for in turn preventing or at least minimising bridging of the material in the hollow interior region 9 over the dispensing auger 18, in this embodiment of the invention comprises a plurality of agitating discs 30 rotatably mounted on the inclined base portions 11. The agitating discs 30 are of injection moulded plastics material and are arranged in pairs, with the agitating disc 30 of each pair located on respective opposite sides of the dispensing channel 14, and in turn on the respective opposite sides of the dispensing auger 18. Each agitating disc 30 is rotatably mounted on a corresponding carrier shaft 31 which extends perpendicularly or substantially perpendicularly, from the corresponding inclined base portion 11 on which the agitating disc 30 is located.

The carrier shafts 31 of the respective agitating discs 30 define respective rotational axes 33 which extend perpendicularly, or substantially perpendicularly, from the relevant one of the inclined base portions 11, about which the respective agitating discs 30 are rotatable. The agitating discs 30 of each pair thereof are aligned with each other transversely across the dispensing auger 18, such that the rotational axes 33 of each pair of agitating discs 30 lie in a common substantially vertically extending plane which extends transversely relative to the central longitudinal axis 19 of the dispensing auger 18. In other words the central longitudinal axis 19 of the dispensing auger 18 is substantially perpendicular to the common plane within which the rotational axes 33 of the agitating discs 30 of each pair thereof lie.

In this embodiment of the invention three agitating discs 30 are located on each inclined base portion 11. The rotational axes 33 of the three agitating discs 30 on each inclined base portion 11 are equi-spaced apart longitudinally along the corresponding inclined base portion 11. It will be understood that any suitable number of agitating discs 30 may be provided on each inclined base portion 11, and while it is preferable it is not essential that the agitating discs 30 be equi-spaced apart on the corresponding inclined base portion 11.

Each agitating disc 30 defines a circular periphery 35 around which a plurality of engagement means, namely, gear teeth 36 are equi-spaced apart circumferentially and extend radially outwardly therefrom.

The gear teeth 36 of the agitating discs 30 are configured for engaging the flight 21 of the dispensing auger 18, so that as the dispensing auger 18 is being rotated about its central longitudinal axis 19 by the drive motor 23, the agitating discs 30 are rotated about the corresponding shafts 31 for agitating the powder material in the hollow interior region 19 of the hopper 1, in order to prevent bridging of the material in the hopper over the dispensing auger 18. The gear teeth 36 of the agitating discs 30, as well as acting as gear teeth for transmitting drive from the dispensing auger 18 to the agitating discs 30, also act to agitate the powder material in the hollow interior region 9 above the dispensing auger 18, in order to prevent bridging thereof. In this embodiment of the invention the agitating discs 30 rest on and abut the corresponding inclined base portion 11 of the base 3.

In this embodiment of the invention the carrier shafts 31 on which the respective agitating discs 30 are rotatably mounted comprise respective threaded bolts 37 which engage correspondingly threaded inserts 38 located in the inclined base portions 11 of the base 3. An elongated sleeve 40 is provided on each threaded bolt 37, and the corresponding agitating disc 30 is rotatable on the sleeves 40. Each sleeve 40 is of length *ℓ* greater than the thickness t of the corresponding agitating disc 30. A washer 41 adjacent a head 42 of each threaded bolt 37 engages the corresponding sleeve 40, so that when the threaded bolt 37 is fully tightened with the sleeve 40 abutting the washer 41 and the corresponding threaded insert 38 in the inclined base portion 11 of the base 3, the corresponding agitating disc 30 is freely rotatable on the sleeve 40.

In this embodiment of the invention, the angles at which the inclined base portions 11 of the base 3 incline downwardly from the respective side walls 5 is similar, and is such that the inclined base portions 11 define an included angle θ which in this embodiment of the invention is approximately 90°, and when the hopper 1 is standing upright, each inclined base portion 11, inclines at an angle of approximately 45° to a vertical plane containing the central longitudinal axis 19 defined by the dispensing auger 18.

Additionally, in this embodiment of the invention although it is not essential, each side wall 5 is shaped to define three arcuate portions 44 which define substantially vertically extending channels 45 into which the respective agitating discs 30 extend adjacent the lower end thereof. Each arcuate portion 44 of each side wall 5 defines a centre of radius adjacent the corresponding inclined base portion 11, which substantially coincides with the point of intersection of the rotational axis 33 of the corresponding agitating disc 30 with the inclined base portion 11 of the base 3. In this embodiment of the invention the radius of each arcuate portion 44 of each side wall 5 is such as to provide clearance within the channel 45 between the corresponding agitating disc 30 and the arcuate portions 44 adjacent the inclined base portion 11 of approximately 8mm.

In this embodiment of the invention the pitch circle diameter of the gear teeth 36 of each agitating disc 30 is approximately 130mm, and the distal ends of the gear teeth 36 of each agitating disc 30 define an outer periphery of the agitating discs 30 of diameter of approximately 146mm. Each agitating disc 30 is of thickness t of approximately 12mm. The length *ℓ* of each sleeve 40 is approximately 13mm. The agitating discs 30 are spaced apart longitudinally along the corresponding inclined base portions 11, centre to centre, a distance of 155mm. The diameter of the envelope defined by the flight 21 of the dispensing auger 18 is approximately 34mm, and the pitch of the flight 21 of the dispensing auger 18 is approximately 40mm. The diameter of the dispensing channel 14 is approximately 40mm.

In use, with the hollow interior region 9 of the hopper 1 charged with powder or granular material, for example, milk powder, when it is desired to dispense the milk powder from the hopper 1, the dispensing auger 18 is rotated by the drive motor 23 which in turn urges the powder material in the dispensing channel 14 longitudinally along the dispensing channel 14 and in turn through the dispensing outlet port 15. As the dispensing augers 18 rotate, the cooperating action between the gear teeth 36 of the agitating discs 30 and the flight 21 of the dispensing auger 18 rotates the agitating discs 30 about their respective rotational axes 33. As the agitating discs 30 rotate, the action of the gear teeth 36 on the adjacent powder material, agitates the powder material, thereby preventing bridging of the powder material over the dispensing auger 18. Additionally, the rotating action of the agitating discs 30 on the powder material also agitates the powder material, and thereby further acts to prevent bridging of the powder material over the dispensing auger 18.

If desired, the on-time of the drive motor 23 for each operation of the dispensing auger 18 may be controlled in order to meter a pre-defined quantity of the powder material by volume on each operation of the dispensing auger, since the volume of the powder material dispensed per each revolution of the dispensing auger 18 is substantially constant. The geared motor 23 could be operated under the control of a signal processor, for example, a microprocessor, or a microcontroller, which could be configured to permit entry of a desired predefined quantity of the powder material to be dispensed from the hopper 1 on each operation of the drive motor 23, and in turn the dispensing auger 18. In which case, on receiving the entered predefined quantity, the microcontroller would set a predefined on-time period for which the drive motor 23 is to be powered each time the powder material is to be dispensed from the hopper 1, and each time the predefined quantity of the powder material is to be dispensed, the drive motor would be powered for the predefined on-time period to dispense the predefined quantity of the powder material by volume.

While the hopper has been described as being of a plastics material, the hopper may be of any other suitable material besides plastics material, and may in certain cases be of a metal or metal alloy material, for example, stainless steel. It will also be appreciated that when produced of plastics material, the hopper may be produced by suitable plastics material forming processes, for example, injection moulding, blow moulding, press moulding, vacuum forming, fabrication or the like.

Needless to say, while the dispensing auger has been described as comprising a wire auger, any other suitable auger may be provided, for example, the dispensing auger may be of the type comprising an elongated central shaft having one or more auger flights or auger discs extending radially therefrom.

It is also envisaged that the dispensing auger may be of any other suitable material besides stainless steel. It is also envisaged that the agitating discs may be of any other suitable material besides plastics material, and may in certain cases be of a metal, or a metal alloy material, for example, stainless steel.

It will also be appreciated that the agitating discs may be of size other than that described as could the dispensing auger likewise be of size other than that described.

While the dispensing hopper has been described for dispensing milk powder, which in general, is of a relatively fine powder consistency, it is envisaged that the dispensing auger may be configured for dispensing any flowable particulate material, including powder material, granular material or other particulate materials of the types hereinbefore defined.

While the pitch circle diameter of the gear teeth of each agitating disc has been described as being approximately 130mm, it will be appreciated that the pitch circle diameter of the gear teeth will be dependent upon the diameter of the outer periphery of each agitating disc, as well as the number of gear teeth on the agitating disc. While each agitating disc has been described as having an outer periphery of diameter of approximately 146mm, it is envisaged that the diameter of each agitating disc will be dependent on the size of the inclined base portions of the hopper. However, in general it is envisaged that the diameter of the outer periphery of each agitating disc will lie in a range of 30mm to 1000mm, and preferably, in a range of 100mm to 300mm. While the thickness t of each agitating disc, has been described as being approximately 12mm, the agitating discs may be of any suitable thickness, and typically, would be of thickness in the range of 2mm to 30mm, and preferably, in the range of 5mm to 15mm. Furthermore, while the diameter of the outer envelope defined by the flight of the dispensing auger has been described as being approximately 34mm, the diameter of the outer envelope of the flight of the dispensing auger will be dependent on the diameter of the dispensing channel, however, in general, it is envisaged that the diameter of the outer envelope defined by the flight of the dispensing auger will lie in the range of 15mm to 60mm, and preferably, will lie in the range of 20mm to 50mm. In general, it is envisaged that the radial clearance between the dispensing auger and the dispensing channel typically, will lie in the range of 2mm to 20mm, and ideally, in the range of 4mm to 8mm. It is also envisaged that the pitch of the dispensing auger may lie in the range of 10mm to 40mm, and ideally, in the range of 20mm to 30mm.

While the inclined base portions have been described as inclining downwardly inwardly towards the dispensing channel and define an included angle θ of approximately 90°, it will be appreciated that the inclined base portion may incline inwardly downwardly towards the dispensing channel at other suitable desired angles to define an included angle between the respective base portions of value other than 90° In general, it is envisaged that the included angle defined by the inclined base portions will lie in the range of 40° to 140°, and preferably, in the range of 65° to 115°.

## Claims

1. A dispensing hopper for dispensing a flowable particulate material, the dispensing hopper comprising a base (3,11), a peripheral wall (4,5,7,8) extending upwardly from and around the base (3,11) and defining with the base (3,11) a hollow interior region (9) for holding the particulate material, a dispensing outlet (15) being provided from the hollow interior region (9), a dispensing element (18) located in the hollow interior region (9) for dispensing the particulate material through the dispensing outlet (15), and at least one agitating element (30) rotatably mounted about a corresponding rotational axis (33) for agitating the particulate material in the hollow interior region (9), the at least one agitating element (30) defining a circular periphery (35) and having a plurality of circumferentially spaced apart engagement elements (36) located around and extending radially outwardly from the periphery (35) thereof, the engagement elements (36) of the at least one agitating element (30) being engageable with the dispensing element (18) for the transfer of drive from the dispensing element (18) to the agitating element (30), so that the at least one agitating element (30) is rotated about the corresponding rotational axis (33) in response to operation of the dispensing element (18), **characterised in that** the at least one agitating element (30) is rotatably mounted on the base (3,11) to one side of the dispensing element (18).

2. A dispensing hopper as claimed in Claim 1 **characterised in that** the engagement elements (36) of the at least one agitating element (30) are configured for agitating the particulate material as the agitating element (30) rotates about its rotational axis (33).

3. A dispensing hopper as claimed in Claim 1 or 2 **characterised in that** the rotational axis (33) about which the at least one agitating element (30) is rotatable is substantially perpendicular to the base (3,11).

4. A dispensing hopper as claimed in any preceding claim **characterised in that** a plurality of the agitating elements (30) are located to the one side of the dispensing element (18), and spaced apart longitudinally along the dispensing element (18).

5. A dispensing hopper as claimed in Claim 4 **characterised in that** the agitating elements (30) are equi-spaced apart longitudinally along the dispensing element (18) to the one side thereof.

6. A dispensing hopper as claimed in any preceding claim **characterised in that** at least one pair of the agitating elements (30) is provided, the agitating elements (30) of the at least one pair thereof being located to the respective opposite sides of the dispensing element (8).

7. A dispensing hopper as claimed in Claim 6 **characterised in that** the rotational axes (33) of the agitating elements (30) of each pair thereof lie in a common plane extending substantially transversely of the dispensing element (18).

8. A dispensing hopper as claimed in any preceding claim **characterised in that** each agitating element (30) comprises a disc element (30).

9. A dispensing hopper as claimed in any preceding claim **characterised in that** the base (3,11) comprises at least one inclined portion (11) inclining downwardly towards the dispensing element (18) on a corresponding side thereof, and the at least one agitating element (30) is located on the at least one inclined portion (11) of the base (3,11).

10. A dispensing hopper as claimed in Claim 9 **characterised in that** respective inclined portions (11) of the base (3,11) incline downwardly towards the dispensing element (18) on respective opposite sides thereof.

11. A dispensing hopper as claimed in any preceding claim **characterised in that** the base (3,11) defines a longitudinally extending dispensing channel (14), and the dispensing element (18) is located in the dispensing channel (14).

12. A dispensing hopper as claimed in any preceding claim **characterised in that** the dispensing element (18) comprises an elongated dispensing auger (18), and the engagement elements (36) of each agitating element (30) are engageable with the flight of the dispensing auger (18).

13. A dispensing hopper as claimed in Claim 12 **characterised in that** the dispensing auger (18) comprises a wire auger (20).

14. A dispensing hopper as claimed in any preceding claim **characterised in that** the dispensing element (18) extends into the dispensing outlet (15).

15. A dispensing hopper as claimed in any preceding claim **characterised in that** the dispensing outlet (15) is defined by a dispensing bore (17) extending through the peripheral wall (4,5,7,8).

## Patentansprüche

1. Ausgabetrichter zum Ausgeben eines fließfähigen partikelförmigen Materials, wobei der Ausgabetrichter einen Boden (3, 11), eine Umfangswand (4, 5, 7, 8), die sich von dem Boden (3, 11) nach oben und um diesen herum erstreckt und mit dem Boden (3, 11) einen hohlen Innenbereich (9) zum Aufnehmen des partikelförmigen Materials definiert, wobei ein Abgabeauslass (15) aus dem hohlen Innenbereich (9) vorhanden ist, ein in dem hohlen Innenbereich (9) zum Ausgeben des partikelförmigen Materials durch den Abgabeauslass (15) angeordnetes Abgabeelement (18), und mindestens ein Rührelement (30) aufweist, das um eine zugehörige Drehachse (33) drehbar angebracht ist, um das partikelförmige Material in dem hohlen Innenbereich (9) zu rühren, wobei das mindestens eine Rührelement (30) einen kreisförmigen Umfang (35) definiert und mehrere in Umfangsrichtung beabstandete Eingriffselemente (36) aufweist, die um seinen Umfang (35) herum angeordnet sind und sich von diesem radial auswärts erstrecken, wobei die Eingriffselemente (36) des mindestens einen Rührelements (30) mit dem Abgabeelement (18) zur Antriebsübertragung von dem Abgabeelement (18) auf das Rührelement (30) in Eingriff bringbar sind, so dass das mindestens eine Rührelement (30) als Reaktion auf einen Betrieb des Abgabeelements (18) um die zugehörige Drehachse (33) gedreht wird,
**dadurch gekennzeichnet, dass** das mindestens eine Rührelement (30) auf einer Seite des Abgabeelements (18) drehbar auf dem Boden (3, 11) angebracht ist.

2. Ausgabetrichter nach Anspruch 1, **dadurch gekennzeichnet, dass** die Eingriffselemente (36) des mindestens einen Rührelements (30) dazu ausgebildet sind, das partikelförmige Material zu rühren, wenn sich das Rührelement (30) um seine Drehachse (33) dreht.

3. Ausgabetrichter nach Anspruch 1 oder 2, **dadurch gekennzeichnet, dass** die Drehachse (33), um die das mindestens eine Rührelement (30) drehbar ist, im Wesentlichen senkrecht zum Boden (3, 11) verläuft.

4. Ausgabetrichter nach einem der vorhergehenden Ansprüche, **dadurch gekennzeichnet, dass** mehrere der Rührelemente (30) auf der einen Seite des Abgabeelements (18) angeordnet und in Längsrichtung entlang des Abgabeelements (18) beabstandet sind.

5. Ausgabetrichter nach Anspruch 4, **dadurch gekennzeichnet, dass** die Rührelemente (30) in Längsrichtung entlang des Abgabeelements (18) auf der einen Seite desselben gleichmäßig beabstandet sind.

6. Ausgabetrichter nach einem der vorhergehenden Ansprüche, **dadurch gekennzeichnet, dass** mindestens ein Paar der Rührelemente (30) vorhanden ist, wobei die Rührelemente (30) des mindestens einen Paares auf den jeweils gegenüberliegenden Seiten des Abgabeelements (18) angeordnet sind.

7. Ausgabetrichter nach Anspruch 6, **dadurch gekennzeichnet, dass** die Drehachsen (33) der Rührelemente (30) jedes Paares in einer gemeinsamen Ebene liegen, die im Wesentlichen quer zum Abgabeelement (18) verläuft.

8. Ausgabetrichter nach einem der vorhergehenden Ansprüche, **dadurch gekennzeichnet, dass** jedes Rührelement (30) ein Scheibenelement (30) umfasst.

9. Ausgabetrichter nach einem der vorhergehenden Ansprüche, **dadurch gekennzeichnet, dass** der Boden (3, 11) mindestens einen geneigten Abschnitt (11) umfasst, der sich abwärts in Richtung des Abgabeelements (18) auf einer entsprechenden Seite desselben neigt, und dass das mindestens eine Rührelement (30) auf dem mindestens einen geneigten Abschnitt (11) des Bodens (3, 11) angeordnet ist.

10. Ausgabetrichter nach Anspruch 9, **dadurch gekennzeichnet, dass** die jeweiligen geneigten Abschnitte (11) des Bodens (3, 11) auf ihren jeweils gegenüberliegenden Seiten abwärts in Richtung des Abgabeelements (18) geneigt sind.

11. Ausgabetrichter nach einem der vorhergehenden Ansprüche, **dadurch gekennzeichnet, dass** der Boden (3, 11) einen sich in Längsrichtung erstreckenden Ausgabeschacht (14) definiert und das Abgabeelement (18) in dem Ausgabeschacht (14) angeordnet ist.

12. Ausgabetrichter nach einem der vorhergehenden Ansprüche, **dadurch gekennzeichnet, dass** das Abgabeelement (18) eine längliche Ausgabeschnecke (18) umfasst und die Eingriffselemente (36) jedes Rührelements (30) mit dem Schneckengang der Ausgabeschnecke (18) in Eingriff bringbar sind.

13. Ausgabetrichter nach Anspruch 12, **dadurch gekennzeichnet, dass** die Ausgabeschnecke (18) eine Drahtschnecke (20) umfasst.

14. Ausgabetrichter nach einem der vorhergehenden Ansprüche, **dadurch gekennzeichnet, dass** sich das Abgabeelement (18) in den Ausgabeauslass (15) erstreckt.

15. Ausgabetrichter nach einem der vorhergehenden Ansprüche, **dadurch gekennzeichnet, dass** der Ausgabeauslass (15) durch eine Ausgabebohrung (17) definiert ist, die sich durch die Umfangswand (4, 5, 7, 8) erstreckt.

## Revendications

1. Trémie de distribution pour distribuer un matériau particulaire fluide, la trémie de distribution comprenant une base (3, 11), une paroi périphérique (4, 5, 7, 8) s'étendant vers le haut depuis et autour de la base (3, 11) et définissant avec la base (3, 11) une région intérieure creuse (9) pour contenir le matériau particulaire, une sortie de distribution (15) étant prévue depuis la région intérieure creuse (9), un élément de distribution (18) situé dans la région intérieure creuse (9) pour distribuer le matériau particulaire à travers la sortie de distribution (15), et au moins un élément d'agitation (30) monté de manière rotative autour d'un axe de rotation correspondant (33) pour agiter le matériau particulaire dans la région intérieure creuse (9), le au moins un élément d'agitation (30) définissant une périphérie circulaire (35) et ayant une pluralité d'éléments d'engagement espacés de manière circonférentielle (36) situés autour et s'étendant radialement vers l'extérieur de sa périphérie (35), les éléments d'engagement (36) du au moins un élément d'agitation (30) pouvant s'engager avec l'élément de distribution (18) pour le transfert de l'entraînement de l'élément de distribution (18) à l'élément d'agitation (30), de sorte que le au moins un élément d'agitation (30) est mis en rotation autour de l'axe de rotation correspondant (33) en réponse à l'actionnement de l'élément de distribution (18), **caractérisé en ce que** le au moins un élément d'agitation (30) est monté de manière rotative sur la base (3, 11) sur un côté de l'élément de distribution (18).

2. Trémie de distribution selon la revendication 1, **caractérisée en ce que** les éléments d'engagement (36) du au moins un élément d'agitation (30) sont configurés pour agiter le matériau particulaire lorsque l'élément d'agitation (30) tourne autour de son axe de rotation (33).

3. Trémie de distribution selon la revendication 1 ou 2, **caractérisée en ce que** l'axe de rotation (33) autour duquel le au moins un élément d'agitation (30) peut tourner est sensiblement perpendiculaire à la base (3, 11).

4. Trémie de distribution selon l'une quelconque des revendications précédentes, **caractérisée en ce qu'**une pluralité d'éléments d'agitation (30) sont situés sur un côté de l'élément de distribution (18), et espacés longitudinalement le long de l'élément de distribution (18).

5. Trémie de distribution selon la revendication 4, **caractérisée en ce que** les éléments d'agitation (30) sont espacés longitudinalement de manière équidistante le long d'un côté de l'élément de distribution (18).

6. Trémie de distribution selon l'une quelconque des revendications précédentes, **caractérisée en ce qu'**au moins une paire d'éléments d'agitation (30) est prévue, les éléments d'agitation (30) de la au moins une paire de ceux-ci étant situés sur les côtés opposés respectifs de l'élément de distribution (8).

7. Trémie de distribution selon la revendication 6, **caractérisée en ce que** les axes de rotation (33) des éléments d'agitation (30) de chaque paire de ceux-ci se trouvent dans un plan commun s'étendant sensiblement transversalement à l'élément de distribution (18).

8. Trémie de distribution selon l'une quelconque des revendications précédentes, **caractérisée en ce que** chaque élément d'agitation (30) comprend un élément de disque (30).

9. Trémie de distribution selon l'une quelconque des revendications précédentes, **caractérisée en ce que** la base (3, 11) comprend au moins une partie inclinée (11) s'inclinant vers le bas en direction de l'élément de distribution (18) sur un côté correspondant de celui-ci, et le au moins un élément d'agitation (30) est situé sur la au moins une partie inclinée (11) de la base (3, 11).

10. Trémie de distribution selon la revendication 9, **caractérisée en ce que** des parties inclinées respectives (11) de la base (3, 11) s'inclinent vers le bas vers l'élément de distribution (18) sur des côtés opposés respectifs de celui-ci.

11. Trémie de distribution selon l'une quelconque des revendications précédentes, **caractérisée en ce que** la base (3, 11) définit un canal de distribution s'étendant longitudinalement (14), et l'élément de distribution (18) est situé dans le canal de distribution (14).

12. Trémie de distribution selon l'une quelconque des revendications précédentes, **caractérisée en ce que** l'élément de distribution (18) comprend une vis de distribution allongée (18), et les éléments d'engagement (36) de chaque élément d'agitation (30) peuvent s'engager avec le filet de la tarière de distribution (18).

13. Trémie de distribution selon la revendication 12, **caractérisée en ce que** la tarière de distribution (18) comprend une tarière à cable (20).

14. Trémie de distribution selon l'une quelconque des revendications précédentes, **caractérisée en ce que** l'élément de distribution (18) s'étend dans la sortie de distribution (15).

15. Trémie de distribution selon l'une quelconque des revendications précédentes, **caractérisée en ce que** la sortie de distribution (15) est définie par un alésage de distribution (17) s'étendant à travers la paroi périphérique (4, 5, 7, 8).
